# EUROPÄISCHE PATENTANMELDUNG

(11) **EP 3 163 520 A1**
(43) Veröffentlichungstag der Anmeldung: **03.05.2017**
(21) Anmeldenummer: 15192353.9
(22) Anmeldetag: 30.10.2015
(51) Int. Cl.: G06Q 10/06, G06Q 50/28

(54) **KOORDINATION EINER LEISTUNGSERBRINGUNG**

(71) Anmelder: Deutsche Post AG, 53113 Bonn (DE)
(72) Erfinder: Hartmann, Bernd, 53501 Grafschaft-Leimersdorf (DE)
(74) Vertreter: Cohausz & Florack

(57) **Zusammenfassung**

In einer Gruppe 120 von Vorrichtungen 100, 110, 111, 112 ist jede Vorrichtung einer bestimmten Einheit zugeordnet ist. Eine erste Vorrichtung 100 der Gruppe erhält Informationen bezüglich einer zu erbringenden Leistung und übermittelt eine Nachricht bezüglich der Leistung an eine Mehrzahl anderer Vorrichtungen der Gruppe. Die erste Vorrichtung ermittelt regelbasiert, ob die zu erbringenden Leistung zumindest teilweise von einer Einheit oder von einer Kombination von Einheiten erbracht werden kann. Die Ermittlung kann auf den Informationen bezüglich der zu erbringenden Leistung sowie auf Informationen zu dem aktuellen Leistungsvermögen der Einheiten erfolgen. Letztere lassen sich von der ersten Vorrichtung anhand von gespeicherten Informationen und von Rückmeldungen der anderen Vorrichtungen bestimmen. Wenn die Leistung zumindest teilweise erbracht werden kann, bucht die erste Vorrichtung Kapazitäten bei der mindestens einen Vorrichtung, die der mindestens einen Einheit, die die Leistung zumindest teilweise erbringen kann, zugeordnet ist.

## Beschreibung

### GEBIET DER ERFINDUNG

Die vorliegende Erfindung betrifft die Koordination der Erbringung einer Leistung, insbesondere aber nicht ausschließlich einer Leistung in der Logistik.

### HINTERGRUND DER ERFINDUNG

Leistungen in der Logistik können beispielsweise ein Abholen, Befördern und/oder Zustellen von Stückgütern umfassen.

Leistungen in der Logistik können beispielsweise ebenso ein Sortieren von Stückgütern durch eine Förder- und Sortieranlage umfassen.

Herkömmlicherweise werden angeforderte Leistungen in einem zentralen Server erfasst. Der Server erstellt dann einen optimierten Beförderungsweg und veranlasst eine Beförderungseinheit oder mehrere Beförderungseinheiten, die Beförderung entsprechend durchzuführen.

### ALLGEMEINE BESCHREIBUNG EINIGER BEISPIELHAFTER AUSFÜHRUNGSFORMEN DER ERFINDUNG

Eine der Aufgaben der Erfindung besteht darin, eine besonders effiziente Leistungserbringung zu ermöglichen.

Die Erfindung wird definiert durch die angehängten Ansprüche.

Ein Ausführungsbeispiel eines erfindungsgemäßen Verfahrens wird durchgeführt von einer ersten Vorrichtung einer Gruppe von Vorrichtungen, wobei jede Vorrichtung der Gruppe einer bestimmten Einheit zugeordnet ist. Das Verfahren umfasst ein Erhalten von Informationen bezüglich einer zu erbringenden Leistung. Das Verfahren umfasst ferner ein Übermitteln einer Nachricht an eine Mehrzahl anderer Vorrichtungen der Gruppe bezüglich der zu erbringenden Leistung basierend auf den erhaltenen Informationen. Das Verfahren umfasst ferner ein regelbasiertes Ermitteln, ob die zu erbringenden Leistung zumindest teilweise von einer Einheit, der eine Vorrichtung der Gruppe zugeordnet ist, oder von einer Kombination von Einheiten, denen jeweils eine Vorrichtung der Gruppe zugeordnet ist, erbracht werden kann, basierend auf den Informationen bezüglich der zu erbringenden Leistung, auf gespeicherten Informationen zu dem aktuellen Leistungsvermögen einer ersten Einheit, der die erste Vorrichtung zugeordnet ist, und auf Rückmeldungen anderer Vorrichtungen der Gruppe zu dem aktuellen Leistungsvermögen von anderen Einheiten, denen die Vorrichtungen, die die Rückmeldungen liefern, zugeordnet sind. Wenn ermittelt wird, dass die zu erbringenden Leistung zumindest teilweise von einer Einheit, der eine Vorrichtung der Gruppe zugeordnet ist, oder von einer Kombination von Einheiten, denen jeweils eine Vorrichtung der Gruppe zugeordnet ist, erbracht werden kann, umfasst das Verfahren ferner ein Buchen von Kapazitäten bei der mindestens einen Vorrichtung der Gruppe, die der mindestens einen Einheit, die die zu erbringenden Leistung zumindest teilweise erbringen kann, zugeordnet ist.

Ein Ausführungsbeispiel einer erfindungsgemäßen Vorrichtung umfasst Mittel zum Veranlassen der Vorrichtung, eine beliebige Ausführungsform des erfindungsgemäßen Verfahrens auszuführen. Die Mittel können beispielhaft mindestens einen Speicher mit Programmanweisungen und mindestens einen Prozessor umfassen. Der mindestens eine Prozessor kann eingerichtet zum Ausführen von Programmanweisungen aus dem mindestens einen Speicher. Die Programmanweisungen können dazu eingerichtet sein, die Vorrichtung zu veranlassen, eine beliebige Ausführungsform des erfindungsgemäßen Verfahrens durchzuführen, wenn sie von dem mindestens einem Prozessor ausgeführt werden. Der Speicher kann ein flüchtiger oder nicht-flüchtiger Speicher sein. Der Speicher kann austauschbar oder fest in die Vorrichtung integriert sein. Die Vorrichtung kann beliebige weitere Komponenten umfassen. Es versteht sich, dass die Mittel alternativ zumindest teilweise auch schaltungstechnisch realisiert sein können.

Ein Ausführungsbeispiel eines erfindungsgemäßen Systems umfasst eine beliebige Ausführungsform einer erfindungsgemäßen Vorrichtung und außerdem weitere Vorrichtungen der Gruppe von Vorrichtungen. Das System kann beliebige weitere Elemente umfassen, beispielsweise einen Server und/oder Vorrichtungen von anderen Gruppen von Vorrichtungen.

Ein Ausführungsbeispiel eines erfindungsgemäßen Computerprogramms umfasst Programmanweisungen, die dazu eingerichtet sind, eine Vorrichtung zu veranlassen, eine beliebige Ausführungsform des erfindungsgemäßen Verfahrens durchzuführen, wenn sie von mindestens einem Prozessor ausgeführt werden.

Das Computerprogramm kann in einem gegenständlichen computerlesbaren Medium gespeichert sein, etwa in einem flüchtigen oder nicht-flüchtigen Programmspeicher einer Vorrichtung oder auf einem Speicherchip oder Memorystick. Es kann aber auch über das Internet und/oder über drahtgebundene Leitungen übertragen werden.

Die Erfindung basiert auf der Überlegung, dass eine zentrale Steuerung von zu erbringenden Leistungen nur bedingt geeignet ist, reale Gegebenheiten vollständig abzubilden.

Die Erfindung sieht daher für beispielhafte Ausführungsformen vor, dass leistungserbringenden Einheiten jeweils eine Vorrichtung zugeordnet ist. Die Vorrichtungen stimmen das Erbringen von Leistungen durch die Einheiten untereinander ab, um das Verhalten der Einrichtungen autonom koordinieren zu können. Eine zu erbringende Leistung wird jeweils in einer Gruppe von Vorrichtungen abgestimmt. Dabei werden zum einen Informationen zu der zu erbringenden Leistung berücksichtigt und zum anderen die aktuellen Einsatzmöglichkeiten der Einheiten.

Hierdurch kann die Erbringung einer Leistung besser so geplant werden, dass sie wirtschaftlich, schnell und zuverlässig bezüglich bestimmter Anforderungen erfolgen kann. Handelt es sich um eine Leistung, die speziell von einem Auftraggeber angefordert wird, so kann damit auch die Zufriedenheit des Auftraggebers besser sichergestellt werden. Ebenso kann ein effizienter Einsatz natürlicher Ressourcen unterstützt werden.

Die Gruppe kann alle einer jeweiligen leistungserbringenden Einheit zugeordneten Vorrichtungen umfassen, die zu einem System gehören, oder nur einen Teil der Vorrichtungen. Umfasst eine Gruppe einen Teil aller Vorrichtungen, so kann dieser Teil der Gruppe fest oder variabel zugeordnet sein. Sind für ein System mehrere Gruppen vorgesehen, so kann die Zuordnung beispielsweise regulär in bestimmten Abständen, wie täglich, wöchentlich oder monatlich, erfolgen. Zusätzlich können optional auch außerplanmäßige Änderungen der Gruppe ermöglicht werden. Die jeweilige Einheit, der eine Vorrichtung zugeordnet ist, kann auch als Teil der Gruppe betrachtet werden.

Eine Gruppe kann auch als Schwarm oder Teilschwarm und die Vorrichtungen als Individuen des Schwarms oder des Teilschwarms angesehen werden, die mit ihrem Schwarmverhalten dazu beitragen können, Leistungserbringungen zu koordinieren und zu optimieren.

In einer beispielhaften Ausführungsform ist eine Einheit, der eine Vorrichtung der Gruppe zugeordnet ist, eine Person, die optional ein Fahrzeug nutzen kann. Eine solche Person kann beispielsweise ein Zusteller oder eine sonstige mit der Beförderung von Stückgütern beauftragte Person sein. Die Vorrichtung kann die Person beispielsweise bei der Beförderung von Stückgütern und beim Nachhalten erfolgter Aktionen unterstützen. Ist die Einheit eine Person, so könnte diese alternativ beispielsweise auch Bedienpersonal für eine Produktionsmaschine sein. Die Vorrichtung kann dann beispielsweise in die Produktionsmaschine integriert sein und der Person Informationen zu jeweils anstehenden Produktionsschritten liefern. In anderen beispielhaften Ausführungsformen ist eine Einheit, der eine Vorrichtung der Gruppe zugeordnet ist, eine Komponente einer Sortiereinrichtung oder eine Komponente einer Produktionsanlage. Die Vorrichtung kann eine solche Komponente beispielsweise direkt ansteuern. Weiter alternativ kann eine Einheit jede beliebige Einheit sein, die zu Leistungen beitragen kann, für die möglicherweise der Beitrag mehrerer Einheiten koordiniert werden muss.

Die Informationen bezüglich einer zu erbringenden Leistung können die erste Vorrichtung auf einem oder auf mehrere Wege erreichen. So können sie beispielsweise auf einer Nutzereingabe über eine Benutzerschnittstelle beruhen, die von der ersten Vorrichtung umfasst ist oder die mit dieser verbunden ist. Alternativ oder zusätzlich können Informationen bezüglich einer zu erbringenden Leistung mittels eines Scans erfasst werden; die erste Vorrichtung kann eine entsprechende Scannerkomponente umfassen oder mit einer Scannerkomponente verbunden sein. Alternativ oder zusätzlich können Informationen bezüglich einer zu erbringenden Leistung mittels einer fotografischen Aufnahme erfasst werden; die erste Vorrichtung kann eine entsprechende Kamerakomponente umfassen oder mit einer Kamerakomponente verbunden sein. Alternativ oder zusätzlich können Informationen bezüglich einer zu erbringenden Leistung über eine Funkschnittstelle erhalten werden. Die Funkschnittstelle kann beispielsweise eine direkte Verbindung mit einem Gerät oder einem Tag über eine kurze Distanz ermöglichen, oder eine indirekte Verbindung über ein drahtloses lokales Netzwerk (WLAN) oder Mobilfunk. Die Informationen können in letzterem Fall beispielsweise von einem Server oder von einer anderen Vorrichtung außerhalb der Gruppe bereitgestellt und übertragen werden.

Die Kommunikation zwischen den Vorrichtungen einer Gruppe kann beispielsweise drahtlos erfolgen, etwa über Mobilfunk, wenn die Vorrichtungen für eine mobile Nutzung vorgesehen sind, oder etwa über ein WLAN, wenn die Vorrichtungen stationär angebracht sind oder für eine mobile Nutzung innerhalb eines eingeschränkten Geländes vorgesehen sind. Die Kommunikation zwischen den Vorrichtungen kann beispielsweise auch drahtgebunden erfolgen, etwa über ein drahtgebundenes lokales Kommunikationsnetzwerk (local area network LAN), wenn die Vorrichtungen stationär angebracht sind.

Die Rückmeldungen anderer Vorrichtungen der Gruppe zu dem aktuellen Leistungsvermögen von Einheiten, denen die Vorrichtungen zugeordnet sind, können unterschiedlicher Art sein. Sie können gespeicherte Informationen umfassen, die von der jeweiligen Vorrichtung lediglich abgerufen und an die erste Vorrichtung übermittelt werden. Sie können aber auch bereits eine erste Auswertung solcher gespeicherter Informationen umfassen.

In einer beispielhaften Ausführungsform umfassen die Rückmeldungen anderer Vorrichtungen der Gruppe zu dem aktuellen Leistungsvermögen von Einheiten, denen die Vorrichtungen, die die Rückmeldungen liefern, zugeordnet sind, eine Angabe zu einem möglichen Beitrag der Einheiten zu der Erbringung der zu erbringenden Leistung. Dies hat den Vorteil, dass der Rechenaufwand an der ersten Vorrichtung geringer gehalten werden kann. Eine Angabe zu einem möglichen Beitrag kann einen einzigen möglichen und konkreten Beitrag definieren oder sie kann eine Mehrzahl von möglichen Beiträgen definieren oder sie kann mindestens einen Beitrag mit akzeptablen Spielräumen für mindestens ein Kriterium definieren. Beispielsweise könnte ein bestimmter Beitrag nicht nur für eine bestimmte Zeit sondern für eine beliebige Zeit in einem definierten Zeitraum angeboten werden.

In einer beispielhaften Ausführungsform umfassen die Informationen zu dem aktuellen Leistungsvermögen der ersten Einheit und/oder die Rückmeldungen zu dem aktuellen Leistungsvermögen weiterer Einheiten Informationen zu der jeweiligen Einheit. Beispiele umfassen Informationen zu einer vorgegebenen Zuständigkeit der jeweiligen Einheit und/oder Informationen zu einer Gesamtkapazität der jeweiligen Einheit und/oder Informationen zu einer freien Kapazität der jeweiligen Einheit und/oder Informationen zu einem Typ der jeweiligen Einheit und/oder Informationen zu einem Typen einer von der jeweiligen Einheit genutzten Einrichtung und/oder Informationen zu einer möglichen Leistungsgeschwindigkeit der jeweiligen Einheit und/oder Informationen zu für die jeweilige Einheit bereits eingeplanten auszuführenden Leistungen und/oder Informationen zu Vorgaben für bereits eingeplante, von der jeweiligen Einheit auszuführende Leistungen und/oder Informationen zu einem Stand von von der jeweiligen Einheit auszuführenden Leistungen und/oder Informationen zu einer aktuelle Position der jeweiligen Einheit und/oder Informationen zu aktuellen Hindernissen, die die jeweilige Einheit betreffen und/oder Informationen zu einer Einsatzfähigkeit der jeweiligen Einheit und/oder Informationen zu einem Funktionszustand der jeweiligen Einheit und/oder Informationen zu einem Funktionszustand einer von der jeweiligen Einheit genutzten Einrichtung.

Informationen zu einer gesamten oder freien Kapazität einer Einheit können beispielsweise Angaben zu einer volumenmäßigen, stückzahlmäßigen, gewichtsmäßigen und/oder zeitlichen Kapazität umfassen. Wenn die Einheit eine Person ist, so können die Informationen insbesondere auch die Kapazität eines von der Person für die Erbringung von Leistungen oder Teilleistungen genutzten Fahrzeugs oder einer von der Person für die Erbringung von Leistungen oder Teilleistungen genutzten Produktionsmaschine betreffen. Wenn die Einheit ein Förderband einer Sortieranlage ist, so kann die Kapazität beispielsweise auch eine zur Verfügung stehende Breite des Förderbandes umfassen. Für die Einheit bereits eingeplante, auszuführende Leistungen und/oder Vorgaben für bereits eingeplante, von der Einheit auszuführende Leistungen können unter anderem eine bezüglich mindestens einer Leistungserbringung vorgegebene Aktionsfolge umfassen. Die Aktionsfolge kann Abläufe zeitlich und/oder geografisch definieren. Vorgaben für bereits eingeplante, von der jeweiligen Einheit auszuführende Leistungen können zugeordnete Prioritäten umfassen, die beispielsweise angeben können welche Leistungen zuerst und/oder mit nicht variablen Zeitabläufen zu erbringen sind. Ein Typ einer Einheit kann beispielsweise unterscheiden zwischen einem Zusteller mit Handkarren, Fahrrad, Motorrad oder Lieferwagen, oder zwischen einer Weiche, einem Sorter und einer Fördereinheit einer Sortieranlage, oder zwischen verschiedenartigen Produktionsmaschinen einer Produktionsanlage. Eine mögliche Leistungsgeschwindigkeit kann beispielsweise die durchschnittliche Geschwindigkeit eines Zustellers zu Fuß, mit dem Fahrrad in der Stadt, mit dem Lieferwagen in der Stadt oder über Land, oder eine maximale Bandgeschwindigkeit einer Fördereinheit oder die Dauer eines bestimmten Produktionsschritts sein. Eine aktuelle Position einer Einheit kann sich insbesondere auf mobile Einheiten beziehen. Eine aktuelle Position einer Einheit kann absolut oder relativ angegeben sein, beispielsweise relativ zu einem Stützpunkt. Ein eine Einheit betreffendes Hindernis kann beispielsweise ein Stau sein, wenn die Einheit ein Zusteller mit Lieferfahrzeug ist, oder es kann beispielsweise eine Blockade in einem Teilsystem sein, wenn die Einheit eine Fördereinheit oder eine Produktionseinheit ist. Die Einsatzfähigkeit einer Einheit kann, wenn diese Einheit eine Person ist, beispielsweise angeben, ob die Person zur Verfügung steht oder, beispielsweise wegen einer Krankheit, ausfällt. Der Funktionszustand einer Einheit kann, wenn diese eine Vorrichtung ist, beispielsweise angeben, ob die Einheit betriebsbereit ist oder nicht, etwa weil sie sich in Reparatur oder Wartung befindet. Der Funktionszustand einer von der jeweiligen Einheit genutzten Einrichtung kann beispielsweise darauf hinweisen, wenn eine eigentlich zur Verfügung stehende Einheit, etwa eine Person, gerade nicht handlungsfähig ist, weil eine genutzte Einrichtung, beispielsweise ein Lieferfahrzeug, ausgefallen ist. Die genannten Beispiele nicht abschließend zu verstehen, sondern dienen lediglich dem besseren Verständnis.

Derartige Informationen zu einer Einheit können beispielsweise als Datensatz in der jeweiligen Vorrichtung gespeichert sein, die der Einheit zugeordnet ist, oder in einem Speicher, auf den die Vorrichtung Zugriff hat, etwa in einem Speicher in einem Gerät, das auch die Vorrichtung umfasst. Die gespeicherten Datensätze können dabei regelmäßig aktualisiert werden.

Umfassen die Rückmeldungen derartige allgemeine Informationen zu dem aktuellen Leistungsvermögen weiterer Einheiten, so kann beispielsweise die erste Vorrichtung einen möglichen Beitrag zu der zu erbringenden Leistung für jede der Einheiten bestimmen. Dies kann den Vorteil haben, dass in einigen Fällen weniger mögliche, aber schwieriger zu realisierende Beiträge einiger Einheiten bestimmt werden müssen, wenn sich leichter zu realisierende, entsprechende Beiträge anderer Einheiten unmittelbar ergeben. Für die Bestimmung können beliebige, für einen jeweiligen Anwendungsfall geeignete Regeln definiert werden. So können Einheiten außer Acht gelassen werden, die die erforderliche Gesamtkapazität nicht haben oder die von einem ungeeigneten Typ sind, bzw. deren Leistungsgeschwindigkeit aufgrund der Vorgaben für die zu erbringende Leistung nicht in Frage kommen. Für grundsätzlich in Betracht kommende Einheiten kann dann geprüft werden, ob sich ein Beitrag - etwa eine Wegstrecke - ohne Änderung in einen bestehenden Aktionsplan für eine Einheit - gegebenenfalls sogar mit zeitlichem Spielraum - integrieren lässt, oder ob er sich mit Änderungen in einen bestehenden Aktionsplan für eine Einheit integrieren lässt, wenn Vorgaben für bereits vorgesehene Beiträge zu Leistungen berücksichtigt werden.

In einer beispielhaften Ausführungsform umfasst ein Ermitteln, dass die zu erbringende Leistung zumindest teilweise von einer Einheit, der eine Vorrichtung der Gruppe zugeordnet ist, oder von einer Kombination von Einheiten, denen jeweils eine Vorrichtung der Gruppe zugeordnet ist, erbracht werden kann, eine Auswahl eines Beitrags mindestens einer Einheit, der eine Vorrichtung der Gruppe zugeordnet ist, zu der Erbringung der zu erbringenden Leistung.

Die erste Vorrichtung kann eine solche endgültige Auswahl eines Beitrags mindestens einer Einheit alleine treffen, oder mindestens eine Alternative für eine Auswahl zur Abstimmung in der Gruppe stellen. Die Auswahl eines Beitrags mindestens einer Einheit kann beispielsweise ein Bestimmen einer möglichen Abfolge von Beiträgen umfassen, die einen optimalen Gesamtnutzen ergibt. Die Bestimmung eines optimalen Gesamtnutzens kann beispielsweise die gesamte Weglänge, die Anzahl der erforderlichen Übergaben und die bisherige Auslastung der Einheiten berücksichtigen. Eine Vielzahl von anderen oder zusätzlichen Kriterien kann ebenso berücksichtigt werden. Umfasst die zu erbringende Leistung eine Zustellung in einem mehrstöckigen Gebäude, so kann es beispielsweise sinnvoll sein, dass die Zustellung durch einen Zusteller erfolgt, der bereits für andere Zustellungen in dem Gebäude an dem Tag eingeplant ist, um zeitraubende Mehrfachauslieferungen auf hohen Etagen zu minimieren.

In einer beispielhaften Ausführungsform umfasst ein Ermitteln, ob die Leistung zumindest teilweise von einer Einheit, der eine Vorrichtung der Gruppe zugeordnet ist, oder von einer Kombination von Einheiten, denen jeweils eine Vorrichtung der Gruppe zugeordnet ist, erbracht werden kann, ein Durchführen einer Abstimmung der Vorrichtungen der Gruppe über mindestens einer von der ersten Vorrichtung vorgeschlagenen Auswahl von mindestens einem Beitrag zu der zu erbringenden Leistung mindestens einer einer Vorrichtung der Gruppe zugeordneten Einheit. So kann beispielsweise vorgesehen sein, dass ein bestimmter Anteil der Vorrichtungen der Gruppe der vorgeschlagenen Auswahl von Beiträgen zustimmen muss, bevor die erste Vorrichtung entsprechende Kapazitäten buchen kann.

In einer beispielhaften Ausführungsform umfasst die gewünschte Leistung eine Beförderung mindestens eines Stückguts. Es sind aber auch beliebige andere Leistungen möglich, wie eine Herstellung eines Produkts mit mehreren Herstellungsschritten.

Beispielhafte Ausführungsformen der Erfindung können für die Koordination der Durchführung von Leistungen unterschiedlicher Art durch eine Gruppe von beliebigen Einheiten eingesetzt werden. So können beispielhafte Ausführungsformen der Erfindung für die Koordination der Abholung und Zustellung von Stückgütern durch eine Gruppe von Zustellern eingesetzt werden. Andere beispielhafte Ausführungsformen der Erfindung können für die Koordination der Verteilung von Stückgütern in einer Sortieranlage eingesetzt werden. Andere beispielhafte Ausführungsformen der Erfindung können für die Koordination eines variablen Produktionsprozesses eingesetzt werden.

In beispielhaften Ausführungsformen ist die erste Vorrichtung ein Handgerät oder ein Modul für ein Handgerät. Ein Handgerät kann beispielsweise ein Smartphone, ein Scanner, ein Tablet PC oder ein beliebiges anderes elektronisches Gerät mit Kommunikationsfähigkeiten sein, das von einer Person bei der Erbringung einer Leistung oder einer Teilleistung genutzt werden kann. In einer anderen beispielhaften Ausführungsform ist die erste Vorrichtung in ein Fahrzeug integriert oder integrierbar. In einer anderen beispielhaften Ausführungsform ist die erste Vorrichtung Teil einer Sortieranlage. In einer anderen beispielhaften Ausführungsform ist die erste Vorrichtung Teil einer Produktionsanlage. Ist die erste Vorrichtung ein Teil einer Anlage, so kann sie beispielsweise eine Steuereinrichtung für eine Einheit sein, oder ein Modul für eine solche Steuereinrichtung. Eine solche Steuereinrichtung kann beispielsweise ein Computer und ein Modul für eine solche Steuereinrichtung kann beispielsweise ein Mikrocontroller sein. Es versteht sich, dass die anderen Vorrichtungen der Gruppe entsprechend ausgebildet sein können.

Die erhaltenen Informationen bezüglich einer zu erbringenden Leistung können beispielsweise eine Anforderung einer gewünschten Leistung oder Informationen zu Umständen, die einen zuvor geplanten Ablauf des Erbringens der Leistung beeinträchtigen, umfassen. Steckt zum Beispiel ein Zusteller mit seinem Lieferfahrzeug im Stau oder hat sein Lieferfahrzeug einen Defekt, und die Erbringung einer oder mehrerer bereits eingeplanter Leistungen ist gefährdet, so kann der Zusteller eine entsprechende Information in ein Handgerät eingeben, das der ersten Vorrichtung entspricht, und das Handgerät koordiniert dann eine entsprechend Umplanung der bereits geplanten Lieferung oder Lieferungen mit den Handgeräten anderer Zusteller einer Gruppe.

In einer beispielhaften Ausführungsform wird eine Information über die gebuchten Kapazitäten an einen Server übermittelt. Alternativ oder zusätzlich wird eine Information über einen verbleibenden Teil der gewünschten Leistung an einen Server übermittelt, sofern ermittelt wurde, dass die Leistung nur teilweise von mindestens einer Einheit, der eine Vorrichtung der Gruppe zugeordnet ist, erbracht werden kann. In einer beispielhaften Ausführungsform kann der Server dann die Erbringung des verbleibenden Teils der gewünschten Leistung durch mindestens eine Einheit veranlasst, der eine Vorrichtung außerhalb der Gruppe von Vorrichtungen zugeordnet ist.

Eine erfindungsgemäße erste Vorrichtung einer Gruppe kann ferner dazu ausgebildet sein, bezüglich anderer Vorrichtungen als weitere Vorrichtung der Gruppe zu agieren. Eine erfindungsgemäße erste Vorrichtung kann hierzu dazu ausgebildet sein, von einer anderen Vorrichtung der Gruppe eine Nachricht bezüglich einer zu erbringenden Leistung zu erhalten, der anderen Vorrichtung der Gruppe basierend auf gespeicherten Informationen eine Rückmeldung über ein aktuelles Leistungsvermögen der Einheit, der die Vorrichtung zugeordnet ist, zu übermitteln und, sofern eine Buchung von Kapazitäten durch die andere Vorrichtung erfolgt, die Buchung zu verarbeiten.

Die Verarbeitung der Buchung kann beispielsweise eine Integrierung des Beitrags in bestehende geplante Aktionsfolgen umfassen. Ist die Vorrichtung einer Person zugeordnet, so kann die Verarbeitung alternativ oder zusätzlich beispielsweise eine Information der Person über eine Benutzerschnittstelle umfassen.

Eine erfindungsgemäße Vorrichtung kann beispielsweise Mittel aufweisen, um mit anderen Vorrichtungen zu kommunizieren, um andere Vorrichtungen serviceorientiert zu unterstützen und die Unterstützung anderer Vorrichtungen anzunehmen. Eine erfindungsgemäße Vorrichtung kann beispielsweise Mittel aufweisen, um eine Einheit, der die Vorrichtung zugeordnet ist, zu veranlassen, eine andere Einheit zu ersetzen, wenn diese ausgefallen ist. Eine erfindungsgemäße Vorrichtung kann beispielsweise Mittel aufweisen zum Erkennen, ob bei der Einheit, die sie zugeordnet ist, eine Störung vorliegt, die eine zugesagte Leistung beeinträchtigen kann, so dass Störungen in der Leistungserbringung minimiert werden können. Störungen können beispielsweise aufgrund einer Nutzereingabe oder einer Meldung einer leistungserbringenden Einheit erkannt werden. Eine erfindungsgemäße Vorrichtung kann beispielsweise Mittel aufweisen zum Erkennen, ob in einer Gruppe eine Störung vorliegt, zum Identifizieren der Störung und zum Minimieren der Auswirkung der Störung. Eine erfindungsgemäße Vorrichtung kann beispielsweise Mittel aufweisen, um Aufklärungs-, Erkundungs- und Verbindungsaufgaben zu übernehmen. Damit kann die Vorrichtung beispielsweise Umstände selber aufspüren, die die Erbringung einer bereits gebuchten zu erbringenden Leistung gegebenenfalls beeinträchtigten. Eine erfindungsgemäße Vorrichtung kann beispielsweise Mittel aufweisen, um die Einheiten, denen die Vorrichtungen der Gruppe zugeordnet sind, ganz oder in Teilbereichen zu lenken und zu leiten. Generell kann eine erfindungsgemäße Vorrichtung beispielsweise Mittel aufweisen, um die Einheiten einer Gruppe zu einer Leistungserstellung zu bewegen. Eine erfindungsgemäße Vorrichtung kann beispielsweise Mittel aufweisen, um als zentrale Komponente einer Gruppe die Einheiten, denen die Vorrichtungen der Gruppe zugeordnet sind, zu führen und zur Kohärenz des Handelns zu bewegen. Eine erfindungsgemäße Vorrichtung kann beispielsweise Mittel aufweisen, um bei Ausfall einer Einheit die Übernahme eines zugewiesenen Beitrags zu einer zu erbringenden Leistung - gegebenenfalls in Abstimmung mit anderen Vorrichtungen der Gruppe - einer anderen Einheit zuzuweisen. Eine erfindungsgemäße Vorrichtung kann beispielsweise Mittel aufweisen, um das Verhalten der Einheit, der die Vorrichtung selber zugeordnet ist, zu planen und situationsbedingt anzupassen. Eine erfindungsgemäße Vorrichtung kann beispielsweise Mittel aufweisen, um mit der Umwelt zu kommunizieren.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als zwingend notwendiger Bestandteil der vorliegenden Erfindung erachtet werden.

### KURZE BESCHREIBUNG DER ZEICHNUNGEN

In den Figuren zeigt:
- Fig. 1: eine schematische Darstellung einer beispielhaften Ausführungsform eines erfindungsgemäßen Systems; und
- Fig. 2: ein Ablaufdiagramm mit Verfahrensschritten einer beispielhaften Ausführungsform des erfindungsgemäßen Verfahrens.

### DETAILLIERTE BESCHREIBUNG EINIGER BEISPIELHAFTERAUSFÜHRUNGSFORMEN DER ERFINDUNG

Die vorliegende Erfindung wird im Folgenden anhand von beispielhaften Ausführungsformen beschrieben, die eine effiziente Koordinierung einer Leistungserbringung ermöglichen.

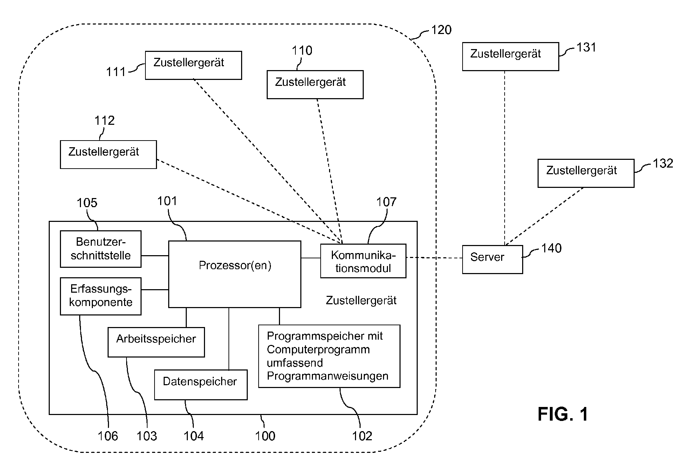

Figur 1 ist eine schematische Darstellung einer beispielhaften Ausführungsform eines erfindungsgemäßen Systems. Das System ist ein System zum Befördern von Packstücken durch Zusteller.

Das System umfasst ein erstes Zustellergerät 100, weitere Zustellergeräte 110, 111, 112, 131 und 132 und einen Server 140. Zustellergeräte 100, 110, 111 und 112 gehören zu einer definierten Gruppe 120 von Zustellergeräten.

Jedes der Zustellergeräte 100,110,111,112,131,132 ist einem bestimmten Zusteller zugeordnet. Unter Zusteller ist hier nicht notwendigerweise nur ein Zusteller zu verstehen, der Packstücke bei Adressaten abliefert, sondern es kann jede Person gemeint sein, die Packstücke auf dem Weg von einem Absender zu einem Empfänger efördert.

Das Zustellergerät 100 kann beispielsweise ein Handgerät sein, etwa in Form eines Smartphones oder eines speziellen, mit einem Scanner ausgestatteten Handgeräts. Das Zustellergerät 100 umfasst einen Prozessor 101, einen Programmspeicher 102, einen Arbeitsspeicher 103, einen Datenspeicher 104, eine Benutzerschnittstelle 105, eine optische Erfassungskomponente 106 und eine Kommunikationsschnittstelle (IF) 107.

Der Prozessor 101 kann mit allen anderen Komponenten 102-107 verbunden sein. Der Prozessor 101 ist dazu eingerichtet, Programmanweisungen aus dem Programmspeicher 102 auszulesen und auszuführen.

Der Programmspeicher 102 ist ein nicht-flüchtiger Speicher. Der Programmspeicher 102 speichert Programmanweisungen umfassende Computerprogramme. Die Programmanweisungen umfassen Programmanweisungen zum Koordinieren der Erbringung von Leistungen in einer Gruppe von Zustellergeräten und Programmanweisungen zum Kooperieren mit anderen Zustellergeräten, die das Erbringen von Leistungen in einer Gruppe koordinieren. Die Programmanweisungen können Teil einer umfassenden Zusteller-Anwendungssoftware sein. Der Programmspeicher 102 kann beliebige andere Programmanweisungen sowie beliebige Parameterwerte und Daten speichern.

Der Arbeitsspeicher 103 ist ein flüchtiger Speicher. Er ist dazu eingerichtet, Daten, die von dem Prozessor 101 benötigt werden, kurzzeitig zwischen zu speichern.

Der Datenspeicher 104 ist ein nicht-flüchtiger Speicher. Er ist dazu eingerichtet, diverse Daten, die für Zustellungen benötigt werden, zu speichern. Solche Daten können beispielsweise eine Identifizierung des Zustellergeräts 100, eine Angabe einer Zugehörigkeit des Zustellergeräts 100 zu einer Gruppe 120 von Zustellergeräten, Angaben zu allen anderen Zustellergeräten 110,111,112 der Gruppe 120, sowie einen Datensatz mit Informationen über das aktuelle Leistungsvermögen eines Zustellers, dem das Zustellergerät 100 zugeordnet ist, umfassen. Die Informationen über das aktuelle Leistungsvermögen können sich dabei etwa unmittelbar auf den Zusteller beziehen, der das Zustellergerät 100 zur Zeit nutzt, auf ein Lieferfahrzeug, das der Zusteller zur Zeit nutzt, auf Packstücke, die von dem Zusteller zu befördern sind, auf eine bislang vorgesehene Aktionsfolge für den Tag, sowie auf externe Umstände, durch die die Arbeit des Zustellers beeinträchtigt wird. Informationen, die sich unmittelbar auf den Zusteller beziehen, können beispielsweise eine Identifizierung des Zustellers, Informationen zu maximalen Arbeitszeiten des Zustellers, Informationen zu einem Zustellgebiet des Zustellers, Informationen zu Zuständigkeiten bzw. Befugnissen des Zustellers und/oder eine aktuelle Position des Zustellers umfassen. Informationen, die sich auf ein Lieferfahrzeug des Zustellers beziehen, können beispielsweise eine Identifizierung des Lieferfahrzeugs, Informationen zum Typ des Lieferfahrzeugs und/oder Informationen zu dem Zustand des Lieferfahrzeugs umfassen. Informationen zu dem Zustand des Lieferfahrzeugs können beispielsweise beinhalten, ob das Fahrzeug gerade funktionstüchtig ist, welche gesamte Ladekapazität es hat, welche aktuell verbleibende Ladekapazität vorhanden ist und/oder welche Kapazitäten auf welchen Teilstrecken eingeplant sind. Informationen zu einer bislang vorgesehenen Aktionsfolge können beispielsweise eine bislang geplante Route für den Tag umfassen. Die Route kann dabei zum Beispiel auch mit Angaben verknüpft sein, an welchen Punkten und/oder zu welchen vorgesehenen Zeiten und in welchem Ausmaß Änderungen der freien Kapazität vorgesehen sind. Informationen zu Packstücken können beliebige Daten zu geladenen, zu ladenden und/oder zu ausgelieferten Packstücken umfassen. Sie können beispielsweise einen Absender, eine Zieladresse, Volumen und Besonderheiten wie zeitliche Vorgaben, Nachnahmevereinbarungen oder Ersatzlieferort angeben, sowie Informationen zum Lieferzustand einzelner Packstücke, wie beispielsweise "abzuholen", "im Fahrzeug", "zugestellt", "fehlgeschlagener Zustellversuch" usw., umfassen. Informationen zu externen Umständen können beispielsweise Daten zu Staus oder Umleitungen umfassen.

Die Benutzerschnittstelle 105 kann beliebige Ein- und Ausgabeeinheiten für den Zusteller umfassen, beispielweise ein berührungsempfindliches Display oder ein nicht berührungsempfindliches Display, eine Tastatur, einzelne Tasten und/oder andere Bedienelemente, ein Mikrophon, mindestens einen Lautsprecher, usw.

Die optische Erfassungskomponente 106 kann beispielsweise ein integrierter Barcode-Scanner oder ein integrierter QR-Code-Scanner sein. Ist das Zustellergerät 100 beispielsweise ein Smartphone, so kann die optische Erfassungskomponente 106 stattdessen auch eine integrierte Kamera sein. Geeignete Programmanweisungen in Programmspeicher 102 können dann dafür vorgesehen sein, um in einem aufgenommenen Bild einen Code oder anderen Informationen zu erkennen und bereitzustellen.

Das Kommunikationsmodul 107 kann beispielsweise ein Mobilfunkmodul sein, das dazu eingerichtet ist, Daten mit anderen Vorrichtungen über ein beliebiges Mobilfunknetz auszutauschen.

Es versteht sich, dass das Zustellergerät 100 diverse andere Komponenten aufweisen kann, wie beispielsweise diverse Sensoren, einen Empfänger für ein globales Navigationssatellitensystem (GNSS), weitere Kommunikationsmodule, weitere Prozessoren und/oder weitere Speicher.

Das Zustellergerät 100 oder eine Komponente des Zustellergeräts 100, das zumindest den Prozessor 101 und den Programmspeicher 102 enthält, ist eine beispielhafte Ausführungsform einer erfindungsgemäßen Vorrichtung. Eine solche Komponente könnte beispielsweise ein integrierter Schaltkreis (IC) sein.

Die weiteren Zustellergeräte 110,111,112,131 und 132 können ähnlich aufgebaut sein wie das Zustellergerät 100. Sie können erfindungsgemäß die weiteren Vorrichtungen darstellen, während die Zusteller beispielhafte Einheiten sein können, denen jeweils eine Vorrichtung zugeordnet ist.

Die Zugehörigkeit der Zustellergeräte 100,110,111,112 zu der Gruppe 120 kann fest oder variabel sein. So könnte beispielsweise jeden Tag eine neue Gruppe 120 definiert werden. Die Gruppe 120 kann beispielsweise alle Zustellergeräte umfassen, die Zustellern zugeordnet sind, die in einer bestimmten Stadt oder in einem bestimmten Zustellbezirk einer Stadt tätig sind.

Die Zustellergeräte 131 und 132 können optional einer anderen Gruppe angehören. Einige Zustellergeräte können auch keiner Gruppe zugeordnet sein, beispielsweise, weil sie Zustellern zugeordnet sind, die Packstücke über lange Strecken transportieren. In einer alternativen Ausführungsform könnten alle Zustellergeräte auch zu einer einzigen Gruppe gehören.

Der Server 140 ist ein ortsfester Server eines Logistikunternehmens. Er ist beispielsweise über ein lokales Netzwerk mit dem Internet verbunden und kann darüber und weiter über das Mobilfunknetz mit allen Zustellergeräten 100,110,111,112,131 und 132 Daten austauschen.

Die dargestellten oder beschriebenen Verbindungen zwischen Komponenten sind als funktionale Verbindungen zu verstehen. Sie können direkt oder indirekt über mehrere andere Komponenten realisiert werden.

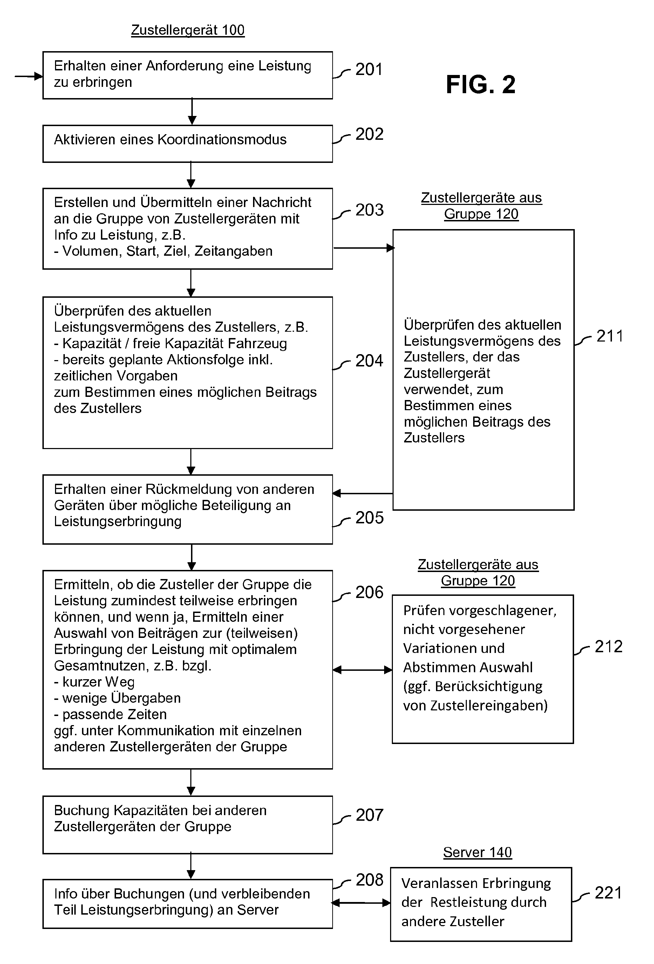

Figur 2 ist ein Ablaufdiagramm, das ein Ausführungsbeispiel eines erfindungsgemäßen Verfahrens, durchgeführt in dem System aus Figur 1, illustriert.

Die auf der linken Seite dargestellten Aktionen werden dabei von dem Zustellergerät 100 ausgeführt, wenn der Prozessor 101 entsprechende Programmanweisungen aus dem Programmspeicher 102 ausliest und ausführt und das Zustellergerät 100 damit zum Ausführen der Aktionen veranlasst. Auf der rechten Seite dargestellte Aktionen werden von anderen Zustellergeräten 110, 111, 112 aus der Gruppe 120 durchgeführt, bzw. von Server 140.

Der Zusteller, dem das Zustellergerät 100 zugeordnet ist, erfährt beispielsweise bei der Kommunikation mit einem Großkunden, dass dieser einen Bedarf zur Abholung von Packstücken im Umfang eines Wechselbehälters hat. Der Zusteller gibt entsprechende Angaben über die Benutzerschnittstelle 105 des Zustellergeräts 100 ein. Die Angaben können beispielsweise eine Serviceidentifikation, eine Abholadresse, eine Zustelladresse, einen Soll-Abholtermin, einen Soll-Liefertermin und/oder eine Soll-Durchlaufzeit, ein Volumen der Lieferung und eine Servicepriorität enthalten. Hat ein Kunde eine Leistung bereits online gebucht und einen entsprechenden Beleg ausgedruckt, so können die Angaben auch über einen Scan eines Codes auf dem Beleg mittels der optischen Erfassungskomponente erfasst werden.

Das Zustellergerät 100 erhält die Angaben und interpretiert sie als Anforderung zur Erbringung einer Leistung. (Aktion 201) Die erhaltene Anforderung stellt beispielhaft erhaltene Informationen bezüglich einer zu erbringenden Leistung dar.

Das Zustellergerät 100 aktiviert daraufhin automatisch einen Koordinationsmodus. (Aktion 202) Im Koordinationsmodus ist das Zustellergerät 100 dafür verantwortlich, die Erbringung der Leistung durch die Gruppe 120 - soweit ganz oder teilweise möglich - zu planen. Die Aktivierung des Koordinationsmodus kann in dem Aufruf entsprechender Programmanweisungen bestehen.

Im Koordinationsmodus erstellt das Zustellergerät 100 automatisch eine Nachricht bezüglich der gewünschten Leistung basierend auf den erhaltenen Informationen. In die Nachricht können beispielsweise die erhaltenen Angaben vollständigen übernommen werden. Das Zustellergerät 100 übermittelt die Nachricht außerdem automatisch an alle anderen Zustellergeräte der Gruppe 120, zu denen das Zustellergerät 100 gehört. Die für die Übermittlung benötigten Informationen zu den anderen Zustellergeräten der Gruppe 120 werden aus dem Datenspeicher 104 ausgelesen. Die Übermittlung erfolgt über Mobilfunk unter Nutzung des Kommunikationsmoduls 107. (Aktion 203)

Das Zustellergerät 100 überprüft das aktuelle Leistungsvermögen des Zustellers, dem das Zustellergerät 100 zugeordnet ist, basierend auf Angaben, die aktuell in einem entsprechenden Datensatz im Datenspeicher 104 gespeichert sind. Anhand des ermittelten aktuellen Leistungsvermögens des Zustellers sowie der erhaltenen Informationen für die zu erbringende Leistung ermittelt das Zustellergerät 100, ob der Zusteller einen Beitrag zu der Beförderung der Packstücke leisten kann. (Aktion 204) Die Auswertung erfolgt auf Basis vordefinierter Regeln, die Teil der Programmanweisungen sind. Die Regeln können dabei beliebig ausgestaltet werden. So kann beispielsweise anhand der generellen Kapazität oder anhand eines Typs des Lieferfahrzeugs ermittelt werden, ob der Zusteller prinzipiell in der Lage ist, das genannte Volumen zu befördern. Anhand einer groben Route zwischen Startpunkt und Zielpunkt der neuen Lieferung könnte dann beispielsweise ermittelt werden, ob die für den Zusteller bislang vorgesehene Aktionsfolge zumindest abschnittsweise eine ähnliche Route vorsieht, ob auf diesem Abschnitt ausreichende freie Kapazitäten zu erwarten sind und ob die Übereinstimmung zu dem für die neue Lieferung vorgegebenen Zeitschema passt. Abschnitte könnten dabei vorzugsweise am Startpunkt, am Zielpunkt und an Stützpunkten des Systems (Hubs im Service- und Transportnetz; üblicher Treffpunkt von Zustellern für Pausen, usw.), an denen eine einfache Übergabe von Packstücken zwischen verschiedenen Zustellern eingeplant werden kann, beginnen bzw. enden.

Parallel dazu empfängt jedes der anderen Zustellergeräte 110,111,112 der Gruppe 120 die in Aktion 203 übermittelte Nachricht über Mobilfunk. Es überprüft das aktuelle Leistungsvermögen des Zustellers, der das jeweilige Zustellergerät 110,111,112 verwendet, und bestimmt anhand dieses aktuellen Leistungsvermögens sowie der erhaltenen Informationen zu der zu erbringenden Leistung, ob der Zusteller einen Beitrag zu der Beförderung der Packstücke leisten kann. (Aktion 211) Die Bestimmung kann in gleicher Weise wie im Zustellergerät 100 erfolgen. Eine Information über einen möglichen Beitrag wird an das Zustellergerät 100 via Mobilfunk übermittelt. Die Information kann beispielsweise einen konkreten, bevorzugten Beitrag und akzeptable Abweichungen umfassen.

Das Zustellergerät 100 erhält die Rückmeldung der anderen Zustellergeräte 110, 111, 112 über den möglichen Beitrag, die diese leisten können. (Aktion 205)

Das Zustellergerät 100 ermittelt nun anhand des eigenen möglichen Beitrags sowie der möglichen Beiträge der anderen Zustellergeräte der Gruppe 120, ob die Zusteller der Gruppe 120 die Leistung ganz oder teilweise erbringen können. Ist dies der Fall, so ermittelt das Zustellergerät 100 eine Auswahl von Beiträgen zur vollständigen oder teilweisen Erbringung der Leistung durch die Zusteller der Gruppe 120 mit optimalem Gesamtnutzen. Der optimale Gesamtnutzen kann beispielsweise die Länge des Gesamtwegs, die Anzahl von erforderlichen Übergaben, die Einhaltung der vorgegebenen Zeiten sowie beliebige weitere Faktoren berücksichtigen. Hierzu stehen dem Zustellergerät 100 als Teil der Programmanweisungen Regelprozesse zur Verfügung, die eine Nutzenfunktion abbilden und damit eine Wertebildung erlauben. Gegebenenfalls kann das Zustellergerät 100 mit einzelnen anderen Zustellergeräten der Gruppe 120 im Rahmen der Auswahl von Beiträgen für die Erbringung der angeforderten Leistung abklären, ob ein angebotener Beitrag stärker als angegeben variiert werden kann. Beispielsweise kann das Zustellergerät 100 klären, ob ein Verlassen eines zugeordneten Zustellungsgebiets, eine größere zeitliche Variation eines angebotenen Beitrags oder eine Verlängerung der regulären Arbeitszeit für einen Zusteller der Gruppe 120 in Frage kommt, usw. (Aktion 206)

Die angefragten Zustellergeräte 110, 111, 112 prüfen die von dem Zustellergerät 100 gegebenenfalls vorgeschlagenen Variationen. Hierzu kann das Zustellergerät 110, 111, 112 bei Bedarf auch eine Eingabe des Zustellers, dem es zugeordnet ist, anfordern. Die angefragten Zustellergeräte 110, 111, 112 liefern eine Rückmeldung mit dem Ergebnis an das Zustellergerät 100. (Aktion 212)

Die Rückmeldung kann dann in Aktion 206 von dem Zustellergerät 100 zusätzlich berücksichtigt werden.

Zusätzlich oder alternativ zu einer Einholung von Zustimmungen zu Variationen der gemeldeten möglichen Beiträgen kann das Zustellergerät 100 vor der endgültigen Auswahl von Beiträgen für die angefragte Leistung allen oder ausgewählten Zustellergeräten 110, 111, 112 der Gruppe 120 optional mindestens eine vorteilhafte Auswahl von Beiträgen für die Erbringung der angefragten Leistung vorschlagen, über die dann in der Gruppe 120 abgestimmt werden kann. Für die Abstimmung können verschiedene Vorgaben vorgesehen sein. Beispielsweise kann es erforderlich sein, dass alle Zustellergeräte der Gruppe 120 oder ein fester Anteil von diesen einer bestimmten Auswahl von Beiträgen zustimmen, oder aber dass alle für eine Auswahl von Beiträgen vorgesehenen Zustellergeräte der Gruppe 120 oder ein fester Anteil von diesen zustimmen. Eine Zustimmung kann optional auch von einer Bestätigung des jeweiligen Zustellers abhängen. (Aktionen 206, 212) Es versteht sich, dass eine Auswahl von Beiträgen auch einen einzigen Beitrag umfassen kann.

Wurde eine Auswahl von Beiträgen ermittelt und gegebenenfalls in einer Abstimmung bestätigt, so bucht das Zustellergerät 100 die hierzu erforderlichen Kapazitäten bei den betroffenen Zustellergeräten der Gruppe 120. Übernimmt der Zusteller, dem das Zustellergerät 100 zugeordnet ist, einen Teil der Leistung, so erfolgt auch eine interne Buchung. Die Buchung bei den anderen Zustellergeräten der Gruppe 120 erfolgt wiederum über eine entsprechende Nachricht, die mittels Mobilfunk an die betroffenen anderen Zustellergeräte der Gruppe 120 übertragen wird. (Aktion 207) Die Zustellergeräte der Gruppe 120, bei denen Kapazität gebucht wurde, informieren ihren Zusteller über die Benutzerschnittstelle des jeweiligen Zustellergeräts.

Die Abstimmung zwischen den Zustellergeräten 100 erfolgt also dezentral, d.h. die Angaben der einzelnen Zustellergeräte werden nicht zunächst von einem Server gesammelt und ausgewertet.

Zusätzlich kann das Zustellergerät 100 jedoch den Server 140 über den Auftrag, die Buchungen und gegebenenfalls über einen verbleibenden Teil der zu erbringenden Leistung, der nicht von der Gruppe 120 geleistet werden kann, informieren. (Aktion 208) Das Zustellergerät 100 kann den Koordinationsmodus dann wieder verlassen.

Existiert ein verbleibender Rest von der zu erbringenden Leistung, so veranlasst der Server 140 ein Erbringen dieser Restleistung durch andere Zusteller außerhalb der Gruppe 120. (Aktion 221) Der Server 140 kann die genaue Zuteilung der Restleistung dabei selber planen, oder er sucht lediglich eine geeignete weitere Gruppe aus, und beauftragt ein Zustellergerät dieser weiteren Gruppe, die Erbringung der Restleistung zu koordinieren. Dieses Zustellergerät kann dann ähnlich vorgehen, wie das Zustellergerät 100 in Aktionen 201 bis 208. Die weitere Gruppe kann beispielsweise alle Zustellergeräte 131, 132 enthalten, die nicht zur Gruppe 120 gehören, oder aber nur einen Teil dieser Zustellergeräte.

In ähnlicher Weise kann auch eine Störung behandelt werden, die bereits eingeplante Leistungen betrifft. Hat beispielsweise das Lieferfahrzeug eines Zustellers einen Defekt, so kann der Zusteller eine entsprechende Information in sein Zustellergerät eingeben. Diese Information wird als Information bezüglich jeder zu erbringenden Leistung erkannt, zu der der Zusteller einen Beitrag leisten sollte. Das Zustellergerät kann dann die Erbringung der Leistungen in Kommunikation mit den anderen Zustellergeräten einer Gruppe selbstständig neu planen. Ein Großteil der Informationen zu den Leistungen kann das Zustellergerät in diesem Fall aus seinem Datenspeicher abrufen. Für alle bereits geladenen Packstücke entspricht dabei ein neuer Startpunkt dem aktuellen Aufenthaltsort des Zustellers und der gewünschte neue Abholzeitpunkt dem aktuellen Zeitpunkt. Die neu zu planenden Leistungen können beispielsweise einzeln neu geplant werden.

Bestimmte Ausführungsformen der Erfindung sehen also vor, dass anstelle einer steuernden Koordination der Beförderung von Packstücken mittels eines Servers eine regelnde Koordination der Beförderung von Packstücken erfolgt, die von einer Gruppe von Zustellergeräten autonom, adaptiv und selbstlernend durchgeführt werden kann. Jeweils eines der Zustellergeräte fungiert dabei als zentrale, führende Komponente der Gruppe, insbesondere das Zustellergerät, bei dem neue Informationen zu einer zu erbringenden Leistung eingehen; alle oder mehrere der Zustellergeräte einer Gruppe können dazu eingerichtet sein, eine solche Führungsrolle zu übernehmen. Aber auch die jeweils anderen Zustellergeräte der Gruppe sind keine reinen Empfänger von Buchungen, sondern evaluieren den aktuellen Zustand selber und geben eine Rückmeldung. Da nicht nur jeweils ein Zustellergerät aus seiner Sicht optimal handelt sondern die Gruppe optimal aus Sicht der Gruppe, können Dienstleistungen wirtschaftlicher erledigt werden, da beispielsweise Durchlaufzeiten reduziert werden können. Die Dienstleistungen können außerdem zur besseren Zufriedenheit der Kunden durchgeführt werden, da beispielsweise Termine, die mit den Dienstleistungen verbunden sind, besonders gut eingehalten werden können.

Die Blöcke 201-208 in Figur 2 können auch als Repräsentation von entsprechenden Programmanweisungen in Programmspeicher 102 gesehen werden.

Das in Figur 1 bespielhaft dargestellte System kann im Rahmen der Erfindung auf vielfältige Weise abgewandelt werden, sowohl durch das Hinzufügen von Komponenten als auch durch das Weglassen von Komponenten, sowie durch das Abwandeln von Komponenten. Hierdurch können sich jeweils weitere oder alternative Vorteile ergeben. Abwandlungen können auch für eine Anpassung an völlig andere Einsatzgebiete durchgeführt werden.

Das mit Bezug auf Figur 2 bespielhaft beschriebene Verfahren kann im Rahmen der Erfindung ebenfalls auf vielfältige Weise abgewandelt werden, sowohl durch das Hinzufügen von Aktionen, durch das Weglassen von Aktionen und durch das Abwandeln von Aktionen. Hierdurch können sich ebenfalls jeweils weitere oder alternative Vorteile ergeben. Auch die Abfolge der geschilderten Aktionen in dem Ablaufdiagramm in Figur 2 ist nicht zwingend; alternative Abfolgen sind denkbar. Schließlich können die Aktionen auf verschiedene Art und Weise implementiert werden. Abwandlungen können wiederum auch für eine Anpassung an völlig andere Einsatzgebiete durchgeführt werden.

Beispielsweise könnten die anderen Zustellergeräte der Gruppe 120 dem ersten Zustellergerät 100 in Aktion 211 anstelle eines möglichen Beitrags eines Zustellers auch vorgegebene und nicht weiter verarbeitete Daten zu dem aktuellen Leistungsvermögen des Zustellers übermitteln. Das erste Zustellergerät 100 könnte dann in Aktion 206 zunächst die möglichen Beiträge aller anderen Zustellergeräte der Gruppe 120 ermitteln.

Beispielsweise könnten alle Zustellergeräte des Systems zu einer einzigen Gruppe gehören.

Beispielsweise könnte die Erfindung auch in einer Sortieranlage implementiert sein, wobei eine Mehrzahl von Einheiten, etwa Förderbänder, Weichen und/oder Sorter, dafür sorgen, dass Stückgüter entlang eines jeweils vorgesehenen Weges befördert werden. Die Vorrichtungen einer Gruppe könnten in diesem Fall stationäre Koordinationsvorrichtungen sein, etwa in Form eines Mikrocomputers mit Kommunikationsschnittstelle. Jede Koordinationsvorrichtung könnte einer Sortiereinheit oder einer Fördereinheit zugeordnet sein und diese steuern. Jeweils eine der Koordinationsvorrichtungen könnte dann Informationen über eine zu erbringende Sortierleistung beispielsweise von einem Sensor erhalten, der Angaben auf einem Stückgut optisch erfasst. Die Informationen könnten beispielsweise eine Angabe eines Zielorts des Stückguts und eine Angabe zu einer gewünschten Art der Beförderung (z.B. per Schiff oder Luftfracht) enthalten und damit implizit auch über eine geeignete Ausgabestelle in der Sortieranlage. Die Koordinationsvorrichtung, die die Information erhält, könnte einer Sortier- oder Fördereinheit zugeordnet sein, die unmittelbar im Anschluss an den Ort der Erfassung durch den Sensor angeordnet ist. Diese Koordinationsvorrichtung stimmt dann die Leistungserbringung mit allen anderen Koordinationsvorrichtungen gemäß deren aktuellem Leistungsvermögen ab, um die erforderliche Sortierleistung sinnvoll und möglichst effizient zu erbringen. Die abgestimmte Leistungserbringung kann beispielsweise den Weg und eine vorteilhafte Geschwindigkeit auf jeder Teilstrecke vorgeben, damit Kollisionen mit anderen Beförderungen vermieden werden.

Es versteht sich, dass die beschriebenen Ausführungsformen generell lediglich Beispiele sind, die im Rahmen der Ansprüche auf vielfältige Weise modifiziert und/oder ergänzt werden können. Insbesondere kann jedes Merkmal, das für ein bestimmtes Ausführungsbeispiel beschrieben wurde, eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

## Patentansprüche

1. Verfahren durchgeführt von einer ersten Vorrichtung (100) einer Gruppe (120) von Vorrichtungen (100, 110, 111, 112), wobei jede Vorrichtung (100,110,111,112) der Gruppe (120) einer bestimmten Einheit zugeordnet ist, das Verfahren umfassend:
- Erhalten von Informationen bezüglich einer zu erbringenden Leistung,
- Übermitteln einer Nachricht an eine Mehrzahl anderer Vorrichtungen (110, 111, 112) der Gruppe (120) bezüglich der zu erbringenden Leistung basierend auf den erhaltenen Informationen,
- regelbasiertes Ermitteln, ob die zu erbringenden Leistung zumindest teilweise von einer Einheit, der eine Vorrichtung (100,110,111,112) der Gruppe (120) zugeordnet ist, oder von einer Kombination von Einheiten, denen jeweils eine Vorrichtung (100, 110, 111, 112) der Gruppe (120) zugeordnet ist, erbracht werden kann, basierend auf den Informationen bezüglich der zu erbringenden Leistung, auf gespeicherten Informationen zu dem aktuellen Leistungsvermögen einer ersten Einheit, der die erste Vorrichtung (100) zugeordnet ist, und auf Rückmeldungen anderer Vorrichtungen (110, 111, 112) der Gruppe (120) zu dem aktuellen Leistungsvermögen von anderen Einheiten, denen die Vorrichtungen (110,111,112), die die Rückmeldungen liefern, zugeordnet sind, und
- wenn ermittelt wird, dass die Leistung zumindest teilweise von einer Einheit, der eine Vorrichtung (100, 110, 111, 112) der Gruppe (120) zugeordnet ist, oder von einer Kombination von Einheiten, denen jeweils eine Vorrichtung (100,110,111,112) der Gruppe (120) zugeordnet ist, erbracht werden kann, Buchen von Kapazitäten bei der mindestens einen Vorrichtung (100, 110, 111, 112) der Gruppe (120), die der mindestens einen Einheit, die die Leistung zumindest teilweise erbringen kann, zugeordnet ist.

2. Verfahren gemäß Anspruch 1, wobei eine Einheit, der eine Vorrichtung der Gruppe zugeordnet ist,
- eine optional ein Fahrzeug nutzende Person ist oder
- eine Komponente einer Sortiereinrichtung ist oder
- eine Komponente einer Produktionsanlage ist.

3. Verfahren gemäß Anspruch 1 oder 2, wobei die Rückmeldungen anderer Vorrichtungen (110,111,112) der Gruppe (120) zu dem aktuellen Leistungsvermögen von Einheiten, denen die Vorrichtungen (110, 111, 112), die die Rückmeldungen liefern, zugeordnet sind, eine Angabe zu einem möglichen Beitrag der Einheiten zu der Erbringung der zu erbringenden Leistung umfassen.

4. Verfahren gemäß einem der Ansprüche 1 bis 3, wobei die Informationen zu dem aktuellen Leistungsvermögen der ersten Einheit und/oder die Rückmeldungen zu dem aktuellen Leistungsvermögen weiterer Einheiten Informationen umfassen zu:
- einer vorgegebenen Zuständigkeit der jeweiligen Einheit und/oder
- einer Gesamtkapazität der jeweiligen Einheit und/oder
- einem Typen der jeweiligen Einheit und/oder
- einem Typen einer von der jeweiligen Einheit genutzten Einrichtung und/oder
- einer möglichen Leistungsgeschwindigkeit der jeweiligen Einheit und/oder
- einer freien Kapazität der jeweiligen Einheit und/oder
- für die jeweilige Einheit bereits eingeplanten auszuführenden Leistungen und/oder
- Vorgaben für bereits eingeplante, von der jeweiligen Einheit auszuführende Leistungen und/oder
- einem Stand von von der jeweiligen Einheit auszuführenden Leistungen und/oder
- einer aktuellen Position der jeweiligen Einheit und/oder
- aktuellen Hindernissen, die die jeweilige Einheit betreffen und/oder
- einer Einsatzfähigkeit der jeweiligen Einheit und/oder
- einem Funktionszustand der jeweiligen Einheit und/oder
- einem Funktionszustand einer von der jeweiligen Einheit genutzten Einrichtung.

5. Verfahren gemäß einem der Ansprüche 1 bis 4, wobei ein Ermitteln, dass die Leistung zumindest teilweise von einer Einheit, der eine Vorrichtung (100, 110, 111, 112) der Gruppe (120) zugeordnet ist, oder von einer Kombination von Einheiten, denen jeweils eine Vorrichtung (100, 110, 111, 112) der Gruppe (120) zugeordnet ist, erbracht werden kann, eine Auswahl eines Beitrags mindestens einer Einheit, der eine Vorrichtung (100, 110, 111, 112) der Gruppe (120) zugeordnet ist, zu der Erbringung der zu erbringenden Leistung umfasst.

6. Verfahren gemäß einem der Ansprüche 1 bis 5, wobei das Ermitteln ein Durchführen einer Abstimmung der Vorrichtungen (100, 110, 111, 112) der Gruppe (120) über mindestens eine von der ersten Vorrichtung (100) vorgeschlagene Auswahl von mindestens einem Beitrag zu der zu erbringenden Leistung mindestens einer einer Vorrichtung (100, 110, 111, 112) der Gruppe (120) zugeordneten Einheit umfasst.

7. Verfahren gemäß einem der Ansprüche 1 bis 6, wobei die zu erbringende Leistung eine Beförderung mindestens eines Stückguts umfasst.

8. Verfahren gemäß einem der Ansprüche 1 bis 7, wobei die erste Vorrichtung (100)
- ein Handgerät ist oder
- ein Modul für ein Handgerät ist oder
- integriert in ein Fahrzeug ist oder
- Teil einer Sortieranlage ist oder
- eine Steuereinrichtung ist oder
- ein Modul für eine Steuereinrichtung ist.

9. Verfahren gemäß einem der Ansprüche 1 bis 8, wobei die erhaltenen Informationen bezüglich einer zu erbringenden Leistung
- eine Anforderung einer gewünschten Leistung oder
- Informationen zu Umständen, die einen zuvor geplanten Ablauf des Erbringens der Leistung beeinträchtigen,
umfassen.

10. Verfahren gemäß einem der Ansprüche 1 bis 9, ferner umfassend:
- Übermitteln einer Information über die gebuchten Kapazitäten an einen Server (140) und/oder
- Übermitteln einer Information über einen verbleibenden Teil der zu erbringenden Leistung an einen Server (140), sofern ermittelt wurde, dass die Leistung nur teilweise von mindestens einer Einheit, der eine Vorrichtung (100, 110, 111, 112) der Gruppe (120) zugeordnet ist, erbracht werden kann, und/oder
- Übermitteln einer Information über einen verbleibenden Teil der zu erbringenden Leistung an einen Server (140), sofern ermittelt wurde, dass die Leistung nur teilweise von mindestens einer Einheit, der eine Vorrichtung (100, 110, 111, 112) der Gruppe (120) zugeordnet ist, erbracht werden kann, wobei der Server (140) die Erbringung des verbleibenden Teils der zu erbringenden Leistung durch mindestens eine Einheit veranlasst, der eine Vorrichtung (131, 132) außerhalb der Gruppe (120) zugeordnet ist.

11. Vorrichtung (100) umfassend Mittel (101, 102) zum Veranlassen der Vorrichtung (100), das Verfahren nach einem der Ansprüche 1 bis 10 auszuführen.

12. Vorrichtung (100) nach Anspruch 11, wobei die Mittel (101, 102) ferner dazu ausgebildet sind,
- von einer anderen Vorrichtung (110,111,112) der Gruppe (120) eine Nachricht bezüglich einer zu erbringenden Leistung zu erhalten,
- der anderen Vorrichtung (110,111,112) der Gruppe (120) basierend auf gespeicherten Informationen eine Rückmeldung über ein aktuelles Leistungsvermögen der Einheit, der die Vorrichtung (100) zugeordnet ist, zu übermitteln, und
- sofern eine Buchung von Kapazitäten durch die andere Vorrichtung (110, 111, 112) erfolgt, die Buchung zu verarbeiten.

13. Vorrichtung (100) nach Anspruch 11 oder 12, wobei die Mittel folgendes umfassen:
- mindestens einen Speicher (102) mit Programmanweisungen und
- mindestens einen Prozessor (101) eingerichtet zum Ausführen von Programmanweisungen aus dem mindestens einen Speicher (102).

14. System umfassend eine Vorrichtung (100) gemäß einem der Ansprüche 11 bis 13 und mindestens eine weitere Vorrichtung (110,111,112) der Gruppe (120) von Vorrichtungen.

15. Computerprogramm mit Programmanweisungen, die dazu eingerichtet sind, eine Vorrichtung (100) zu veranlassen, das Verfahren nach einem der Ansprüche 1 bis 10 durchzuführen, wenn sie von mindestens einem Prozessor (101) ausgeführt werden.

## Geänderte Patentansprüche

### Geänderte Patentansprüche gemäss Regel 137(2) EPÜ.

1. Vorrichtung zum Anschluss eines rohrförmigen Bohrwerkzeuges an den Kraftdrehkopf eines Bohrgerätes, mit einem Anschlussrohr sowie wenigstens zwei radial angeordneten, durch das Anschlussrohr geführten Verriegelungsbolzen, die in eine entsprechende Öffnung eines Bohrwerkzeuges eingreifen, wobei wenigstens zwei Aktuatoren angeordnet sind, über die die wenigstens zwei Verriegelungsbolzen bewegbar sind, wobei Mittel zur autarken Energieerzeugung angeordnet sind, über die die wenigstens zwei Aktuatoren betreibbar sind, die durch einen Hydraulikzylinder (31) gebildet sind, wobei die Mittel zur autarken Energieerzeugung einen Pumpzylinder (41) umfassen, der mit einem Druckbehälter (4) verbunden ist, mit dem die wenigstens zwei Aktuatoren verbunden sind, wobei der Pumpzylinder (41) über Betätigungsmittel betrieben ist, die durch den Einschub eines aufzunehmenden Bohrwerkzeuges (6) in das Anschlussrohr (1) antreibbar sind, **dadurch gekennzeichnet, dass** die Betätigungsmittel entweder eine Schubstange (42) umfassen, die durch ein aufzunehmendes Bohrwerkzeug betätigbar ist, wobei die Schubstange (42) an ihrem dem Pumpzylinder gegenüberliegenden Ende mit einer Schubklaue (43) versehen ist, die durch eine Öffnung (17) des Anschlussrohres (1) in dieses hineinragt oder durch das Anschlussrohr (1) gebildet sind, das in einem Aufnahmekopf vertikal verschiebbar gelagert ist.

2. Vorrichtung nach einem der vorgenannten Ansprüche, **dadurch gekennzeichnet, dass** der Verriegelungsbolzen (33) über eine Schwinge (32) mit dem Aktuator verbunden ist, wobei die Schwinge (32) über ein Federelement in Schließposition des Verriegelungsbolzens (33) vorgespannt ist.

3. Vorrichtung nach Anspruch 7, **dadurch gekennzeichnet, dass** das Federelement in den Aktuator integriert ist

4. Vorrichtung nach einem der vorgenannten Ansprüche, **dadurch gekennzeichnet, dass** der Aktuator mit einer Funksteuerung (51) verbunden ist, über welche dieser fernbedienbar ist.

5. Vorrichtung nach einem der vorgenannten Ansprüche, **dadurch gekennzeichnet, dass** die wenigstens zwei Verriegelungsbolzen (33) an ihrem der Schwinge (32) abgewandten Ende konisch ausgebildet sind.

6. Vorrichtung nach Anspruch 10, **dadurch gekennzeichnet, dass** die Verriegelungsbolzen (33) an ihrem der Schwinge (32) abgewandten Ende eine winklig angestellte Steuerfläche (34) aufweisen.

7. Vorrichtung nach Anspruch 11 **dadurch gekennzeichnet, dass** die Steuerfläche (34) in einem Winkel von 20° bis 40°, bevorzugt in einem Winkel von 30° zur Stirnfläche des Verriegelungsbolzens (33) angestellt ist.
